(19) Europäisches Patentamt / European Patent Office / Office européen des brevets

(11) **EP 4 398 125 A1**

(12) **EUROPEAN PATENT APPLICATION**

(43) Date of publication:
**10.07.2024 Bulletin 2024/28**

(21) Application number: **24150426.5**

(22) Date of filing: **04.01.2024**

(51) International Patent Classification (IPC):
**G06F 16/53** (2019.01)      **G06F 16/55** (2019.01)
**G06F 16/56** (2019.01)

(52) Cooperative Patent Classification (CPC):
**G06F 16/56; G06F 16/53; G06F 16/55**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **04.01.2023 US 202318150129**

(71) Applicant: **Autodesk, Inc.**
**San Francisco, CA 94105 (US)**

(72) Inventors:
• **SCHREIBER, Andre Maurice**
**San Francisco, 94105 (US)**
• **ZHANG, Ran**
**San Francisco, 94105 (US)**

(74) Representative: **Morrall, Jonathan Ian McLachlan et al**
**Kilburn & Strode LLP**
**Lacon London**
**84 Theobalds Road**
**London WC1X 8NL (GB)**

(54) **CONTRASTIVE MULTI-FORMAT SHAPE SIMILARITY AND SEARCH**

(57)      One embodiment of the present invention sets forth a technique for analyzing similarities associated with a plurality of shapes. The technique includes determining a first embedding for a first query shape associated with a first format and a first plurality of embeddings for a first plurality of shapes associated with a second format, wherein the first embedding and the first plurality of embeddings are generated by one or more trained machine learning models based on the first query shape and the first plurality of shapes. The technique also includes matching, based on the first embedding and the first plurality of embeddings, the first query shape to one or more shapes included in the first plurality of shapes. The technique further includes outputting the one or more shapes in a first response associated with the first query shape.

**EP 4 398 125 A1**

```
                    ┌─────────┐
                    │  Start  │
                    └─────────┘
                         │
                         ▼
  ┌────────────────────────────────────────────┐
  │ Receive a query that includes one or more   │
  │ sets of query shape attributes associated   │
  │ with one or more query shapes               │
  │                    602                      │
  └────────────────────────────────────────────┘
                         │
                         ▼
  ┌────────────────────────────────────────────┐
  │ Determine a query shape embedding based on  │
  │ the query shape attributes                  │
  │                    604                      │
  └────────────────────────────────────────────┘
                         │
                         ▼
  ┌────────────────────────────────────────────┐
  │ Match the query shape(s) to one or more     │
  │ target shapes in one or more target formats │
  │ based on the query shape embedding and a    │
  │ set of embeddings for a set of shape        │
  │ representations in the target format(s)     │
  │                    606                      │
  └────────────────────────────────────────────┘
                         │
                         ▼
  ┌────────────────────────────────────────────┐
  │ Output the target shape(s) in a response to │
  │ the query                                   │
  │                    608                      │
  └────────────────────────────────────────────┘
                         │
                         ▼
                    ┌─────────┐
                    │   End   │
                    └─────────┘
```

**FIG. 6**

**Description**

**BACKGROUND**

**Field of the Various Embodiments**

Embodiments of the present disclosure relate generally to computer science and machine learning and, more specifically, to contrastive multi-format shape similarity and search.

**Description of the Related Art**

In computer-aided design (CAD) and computer-aided manufacturing (CAM), an object is typically represented using a variety of different formats that are implemented at different stages of the design and manufacturing process. For example, the manufacturing of a component can begin with a text-based description of the requirements to be met by the component. The text-based requirements can be converted into a two-dimensional (2D) sketch, which is subsequently used to generate a three-dimensional (3D) model of the component. The 3D model can then be converted into a mesh or boundary representation that is used in one or more simulations of the component. After the simulation(s) are complete, 2D drawings that depict different views of the component and include dimensions for various lines, arcs, circles, ellipses, or other entities in each view are generated and used to support the manufacturing and/or assembly of the component.

Because CAD data tends to involve complex shapes and multiple representations of the same shape in different formats, objects and shapes that are developed using CAD programs can be difficult to characterize, compare, and retrieve using conventional techniques. For example, complex geometries (e.g., 2D or 3D shapes, proportions, dimensions, arrangements of shapes, contours, surfaces, etc.) associated with objects can be difficult to describe using words, phrases, or sentences. Accordingly, a traditional text-based search that relies on words, phrases, or sentences to describe a specific object can fail to be precise or specific enough to retrieve CAD data for that object from a database or repository of CAD data for a larger set of objects (e.g., a CAD dataset associated with a person, a group of users, a company, etc.). In another example, each format in which an object can be represented can include, exclude, or have a different way of specifying or depicting proportions, dimensions, shapes, contours, surfaces, materials, or other attributes of the object. Consequently, these attributes cannot be used to characterize similarities or differences in objects that are represented in different formats without performing complex tasks such as manually or explicitly establishing mappings between attributes in these formats or converting the objects into the same format. This inability to easily measure similarities or differences between objects in different formats can further interfere with tasks such as retrieving CAD data for the same object in multiple formats, using an object as a reference or template for annotating or dimensioning similar objects, identifying objects that are similar to one another when the objects are represented using different formats, and identifying an object that is a combination of attributes from multiple other objects.

Difficulties in retrieving, comparing, and characterizing objects in different formats can additionally lead to problems and inefficiencies in designing and manufacturing the objects. For example, an inability to easily retrieve all formats in which a given component is represented can cause some representations of the component to be lost or omitted. As a result, additional time and resource overhead could be incurred in attempting to retrieve or recreate the lost or omitted representations before performing additional design or manufacturing of the component.

As the foregoing illustrates, what is needed in the art are more effective techniques for processing CAD data in different formats.

**SUMMARY**

One embodiment of the present invention sets forth a technique for analyzing similarities associated with a plurality of shapes. The technique includes determining a first embedding for a first query shape associated with a first format and a first plurality of embeddings for a first plurality of shapes associated with a second format, wherein the first embedding and the first plurality of embeddings are generated by one or more trained machine learning models based on the first query shape and the first plurality of shapes. The technique also includes matching, based on the first embedding and the first plurality of embeddings, the first query shape to one or more shapes included in the first plurality of shapes. The technique further includes outputting the one or more shapes in a first response associated with the first query shape.

One technical advantage of the disclosed techniques relative to the prior art is that, with the disclosed techniques, embeddings of shapes can be used to characterize similarity or dissimilarity in the shapes even when the shapes are represented using different formats. Accordingly, the disclosed techniques can be used to retrieve target shapes that are the same as or similar to a query shape, independent of the formats in which the query shape and target shapes are represented or stored. In addition, because the embeddings can be aggregated or processed to represent combinations or transformations of the corresponding shapes, the disclosed techniques can be used to identify target shapes that combine the attributes of two or more query shapes or process other types of queries related to similarity in the shapes across multiple formats. These technical advantages provide one or more technological improvements over prior art approaches.

## BRIEF DESCRIPTION OF THE DRAWINGS

So that the manner in which the above recited features of the various embodiments can be understood in detail, a more particular description of the inventive concepts, briefly summarized above, may be had by reference to various embodiments, some of which are illustrated in the appended drawings. It is to be noted, however, that the appended drawings illustrate only typical embodiments of the inventive concepts and are therefore not to be considered limiting of scope in any way, and that there are other equally effective embodiments.

Figure 1 illustrates a computing device configured to implement one or more aspects of various embodiments.

Figure 2 sets forth more detailed illustrations of the training engine, mapping engine, and evaluation engine of Figure 1, according to various embodiments.

Figure 3A illustrates how the training engine of Figure 1 generates a set of trained machine learning models, according to various embodiments.

Figure 3B illustrates how the training engine of Figure 1 generates a set of trained machine learning models, according to various embodiments.

Figure 4A illustrates how the evaluation engine of Figure 1 processes a query, according to various embodiments.

Figure 4B illustrates how the evaluation engine of Figure 1 processes a query, according to various other embodiments.

Figure 5 sets forth a flow diagram of method steps for training a set of machine learning models to generate embeddings for shapes that can be represented using different formats, according to various embodiments.

Figure 6 sets forth a flow diagram of method steps for processing a query associated with one or more shapes that are represented using different formats, according to various embodiments.

## DETAILED DESCRIPTION

In the following description, numerous specific details are set forth to provide a more thorough understanding of the various embodiments. However, it will be apparent to one of skill in the art that the inventive concepts may be practiced without one or more of these specific details.

### System Overview

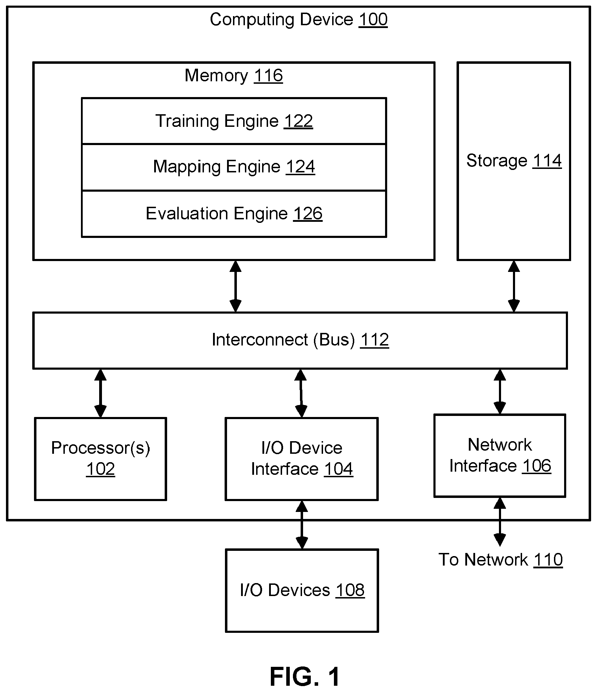

Figure 1 illustrates a computing device 100 configured to implement one or more aspects of the present invention. Computing device 100 may be a desktop computer, a laptop computer, a smart phone, a personal digital assistant (PDA), tablet computer, or any other type of computing device configured to receive input, process data, and optionally display images, and is suitable for practicing one or more embodiments of the present invention. Computing device 100 is configured to run a training engine 122, a mapping engine 124, and an evaluation engine 126 that reside in a memory 116.

It is noted that the computing device described herein is illustrative and that any other technically feasible configurations fall within the scope of the present invention. For example, multiple instances of training engine 122, mapping engine 124, and evaluation engine 126 could execute on a set of nodes in a distributed and/or cloud computing system to implement the functionality of computing device 100.

In one embodiment, computing device 100 includes, without limitation, an interconnect (bus) 112 that connects one or more processors 102, an input/output (I/O) device interface 104 coupled to one or more input/output (I/O) devices 108, memory 116, a storage 114, and a network interface 106. Processor(s) 102 may be any suitable processor implemented as a central processing unit (CPU), a graphics processing unit (GPU), an application-specific integrated circuit (ASIC), a field programmable gate array (FPGA), an artificial intelligence (AI) accelerator, any other type of processing unit, or a combination of different processing units, such as a CPU configured to operate in conjunction with a GPU. In general, processor(s) 102 may be any technically feasible hardware unit capable of processing data and/or executing software applications. Further, in the context of this disclosure, the computing elements shown in computing device 100 may correspond to a physical computing system (e.g., a system in a data center) or may be a virtual computing instance executing within a computing cloud.

In one embodiment, I/O devices 108 include devices capable of receiving input, such as a keyboard, a mouse, a touchpad, and/or a microphone, as well as devices capable of providing output, such as a display device and/or speaker. Additionally, I/O devices 108 may include devices capable of both receiving input and providing output, such as a touchscreen, a universal serial bus (USB) port, and so forth. I/O devices 108 may be configured to receive various types of input from an end-user (e.g., a designer) of computing device 100, and to also provide various types of output to the end-user of computing device 100, such as displayed digital images or digital videos or text. In some embodiments, one or more of I/O devices 108 are configured to couple computing device 100 to a network 110.

In one embodiment, network 110 is any technically feasible type of communications network that allows data to be exchanged between computing device 100 and external entities or devices, such as a web server or another networked computing device. For example, network 110 could include a wide area network (WAN), a local area network (LAN), a wireless (WiFi) network, and/or the Internet, among others.

In one embodiment, storage 114 includes non-volatile storage for applications and data, and may include fixed or removable disk drives, flash memory devices, and CD-ROM, DVD-ROM, Blu-Ray, HD-DVD, or other magnetic, optical, or solid-state storage devices. Training engine 122, mapping engine 124, and evaluation engine 126 may be stored in storage 114 and loaded into memory 116 when executed.

In one embodiment, memory 116 includes a random access memory (RAM) module, a flash memory unit, or any other type of memory unit or combination thereof. Processor(s) 102, I/O device interface 104, and network interface 106 are configured to read data from and write data to memory 116. Memory 116 includes various software programs that can be executed by processor(s) 102 and application data associated with said software programs, including training engine 122, mapping engine 124, and evaluation engine 126.

In some embodiments, training engine 122, mapping engine 124, and evaluation engine 126 include functionality to characterize similarities across shapes that can be represented using a variety of formats. For example, training engine 122, mapping engine 124, and evaluation engine 126 could be used to determine similarities in designs that can be represented using hand-drawn sketches, two-dimensional (2D) drawings, images, three-dimensional (3D) models, meshes, boundary representations, point clouds, text-based descriptions, or other formats.

More specifically, training engine 122 trains a set of machine learning models to generate embeddings for shapes associated with different formats, so that measures of similarity between embeddings for the same shape in different formats are maximized and measures of similarity between embeddings for different shapes in the same format or different formats are minimized. Mapping engine 124 uses the trained machine learning models to generate mappings between shapes in various formats and the corresponding embeddings. Evaluation engine 126 uses the mappings to process queries related to the shapes. As described in further detail below, training engine 122, mapping engine 124, and evaluation engine 126 can be used to perform operations such as (but not limited to) matching a query shape in a given format to representations of the same shape in other formats, identifying shapes in one or more formats that are similar to a query shape, identifying shapes in multiple formats that are similar to combinations of multiple query shapes, using an object as a template or reference for creating, annotating, or dimensioning similar objects, or generating shapes in various formats based on the corresponding embeddings.

## Contrastive Multi-Format Shape Similarity and Search

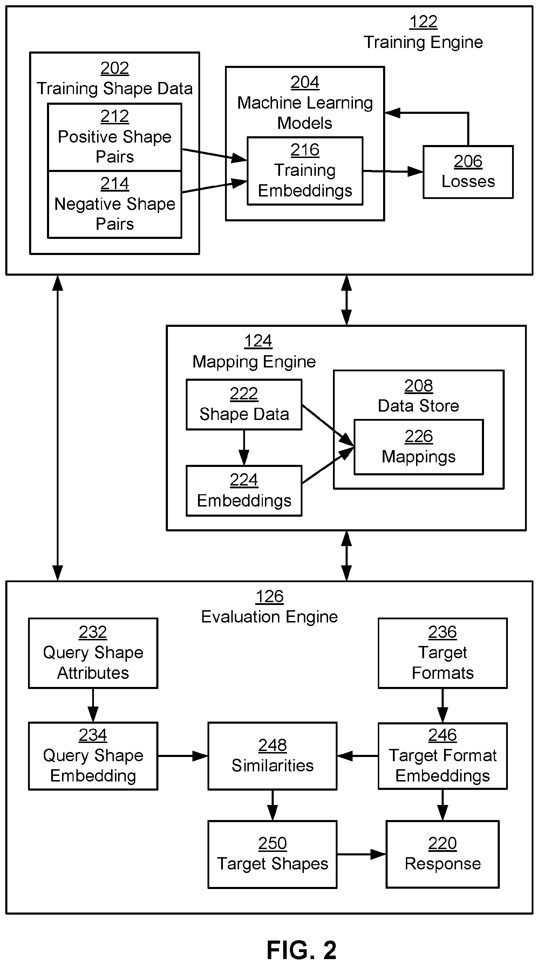

Figure 2 includes more detailed illustrations of training engine 122, mapping engine 124, and evaluation engine 126 of Figure 1, according to various embodiments. As mentioned above, training engine 122, mapping engine 124, and evaluation engine 126 operate to train and execute a set of machine learning models 204 that convert shape data 222 associated with shapes in multiple formats into embeddings 224. Training engine 122, mapping engine 124, and evaluation engine 126 additionally use embeddings 224 to process queries related to similarities 248 across shapes, independent of the formats in which the shapes are represented.

As mentioned above, shape data 222 includes representations of shapes in multiple formats. For example, shape data 222 could include (but is not limited to) sketches, 2D drawings, rendered or captured images, 3D models, meshes, boundary representations, point clouds, text-based descriptions of shapes, floorplans, construction models, generative designs, or other depictions of 2D or 3D shapes. A given shape in shape data 222 can be represented using multiple formats. For example, a 3D shape corresponding to a bolt, screw, washer, or another component that is used in manufacturing or assembly could be represented using at least one of a text-based description of requirements to be met by the component, a hand-drawn sketch, a 3D model, a point cloud, a mesh, a boundary representation, one or more images, or one or more 2D drawings.

Machine learning models 204 are used to generate embeddings 224 of shape data 222. For example, machine learning models 204 could include (but are not limited to) one or more convolutional neural networks, fully connected neural networks, recurrent neural networks, residual neural networks, transformer neural networks, autoencoders, variational autoencoders, generative adversarial networks, or other types of neural networks that are capable of converting shape data 222 into embeddings 224 in a lower-dimensional latent space. Machine learning models 204 could also, or instead, include other techniques for converting shape data 222 into lower-dimensional vector spaces, such as (but not limited to) latent semantic analysis, Latent Dirichlet Allocation, mixture models, hidden Markov models, or encoding techniques.

In one or more embodiments, a separate machine learning model in the set of machine learning models 204 is used to generate embeddings 224 for shape data 222 in a corresponding format. For example, machine learning models 204 could include multiple encoder neural networks that separately process shape data 222 in different formats to generate corresponding embeddings 224. These encoder neural networks could include a shape-recognition convolutional neural network that combines images of a shape from multiple viewpoints into a pooled embedding that is then used to classify the shape. These encoder neural networks could also, or instead, include a UV-net encoder that operates directly on boundary representation data for a 3D model to generate one-dimensional (1D) and 2D grid representations of features related to the surface of the 3D model and curves in the 3D model. The UV-net encoder also includes a graph neural network that performs message passing via nodes that store the surface features and edges that store the curve features to generate embeddings for the surfaces, edges, and the entire 3D model.

Continuing with the above example, these encoder neural networks could also, or instead, include a dynamic graph convolutional network that dynamically computes graphs from point cloud data at each layer and uses an EdgeConv operation to generate embeddings that describe the relationships between a point and the neighbors of the point. These encoder neural networks could also, or instead, include a message-passing graph neural network that generates an embedding from a hierarchical graph of points, entities, views, or other elements in a 2D drawing. In particular, the message-passing graph neural network could convert each node in the graph into a node embedding and perform a message passing procedure that iteratively updates each node embedding based on embeddings for an increasing radius of nodes around the node until a certain number of updates is performed. These encoder neural networks could also, or instead, include various types of image encoders that generate image embeddings and text encoders that generate text embeddings from words, phrases, sentences, or other text strings.

Alternatively, machine learning models 204 can include a single machine learning model that generates embeddings 224 for shape data 222 in more than one format. For example, machine learning models 204 could include a neural network with multiple branches that convert shape data 222 in multiple formats into corresponding embeddings 224.

In some embodiments, some or all machine learning models 204 are pre-trained to perform various tasks. For example, machine learning models 204 could include pre-trained image embedding models, text embedding models, convolutional neural networks, graph neural networks, or other types of neural networks that are capable of generating embeddings 224 that encode curves, corners, angles, dimensions, proportions, surfaces, textures, points, or other spatial, structural, visual, or geometric attributes of the corresponding shapes.

Alternatively, some or all machine learning models 204 are not pre-trained. Instead, these machine learning models 204 can be initialized using random parameters and subsequently trained by training engine 122.

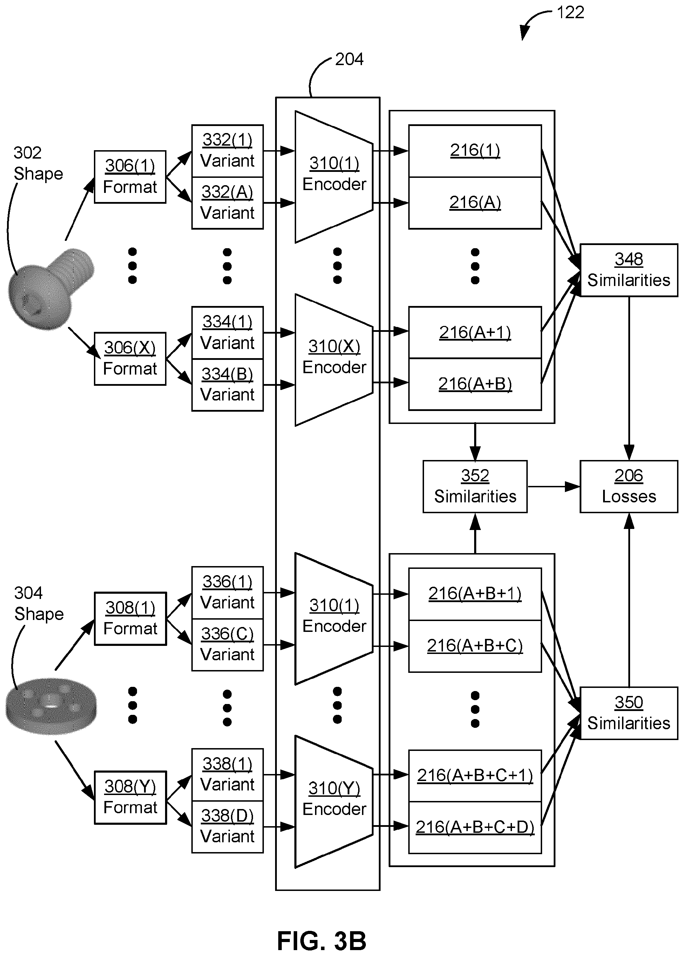

Training engine 122 trains pre-trained and/or newly initialized machine learning models 204 using training shape data 202 that includes a set of positive shape pairs 212 and a set of negative shape pairs 214. Training shape data 202 includes shapes that are represented using multiple formats, such as (but not limited to) any of the formats described above with respect to shape data 222. Training shape data 202 can also, or instead, include variants of the shapes that are generated by applying various types of data augmentations to a set of original shapes, as described in further detail below with respect to Figure 3B.

Positive shape pairs 212 include pairs of examples from training shape data 202 that correspond to the same shape. Negative shape pairs 214 include pairs of examples from training shape data 202 that correspond to different shapes. For example, each of positive shape pairs 212 could be selected from images, sketches, drawings, 3D models, meshes, boundary representations, point clouds, text-based descriptions, or other representations of the same shape. Each of negative shape pairs 214 could include representations of two different shapes in the same format or different formats.

Training engine 122 inputs training shape data 202 corresponding to positive shape pairs 212 and negative shape pairs 214 into the corresponding machine learning models 204. For example, training engine 122 could input images that depict multiple views of a shape into a shape recognition convolutional neural network. Training engine 122 could also, or instead, input text into a transformer, recurrent neural network, or another type of text embedding model. Training engine 122 could also, or instead, input boundary representations of 3D models into a UV-net encoder. Training engine 122 could also, or instead, input point clouds into a dynamic graph convolutional network. Training engine 122 could also, or instead, input a hierarchical graph of points, entities, views, or other elements in a 2D drawing into a message-passing graph neural network.

Training engine 122 also executes machine learning models 204 to generate output that includes training embeddings 216 associated with positive shape pairs 212 and negative shape pairs 214. For example, training engine 122 could use a machine learning model associated with a given format of training shape data 202 to convert inputted training shape data 202 associated with that format into a corresponding set of training embeddings 216.

Training engine 122 then computes one or more losses 206 associated with training embeddings 216, positive shape pairs 212, and/or negative shape pairs 214 and updates parameters of machine learning models 204 based on losses 206. For example, training engine 122 could use a contrastive loss to train machine learning models 204 so that measures of similarity computed between training embeddings 216 of positive shape pairs 212 are maximized and measures of similarity computed between training embeddings 216 of negative shape pairs 214 are minimized.

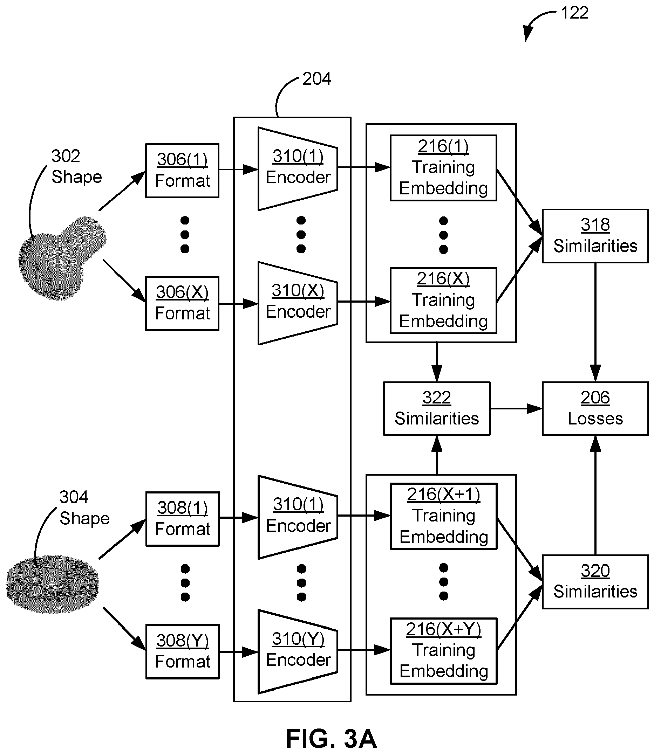

Figure 3A illustrates how training engine 122 of Figure 1 generates a set of trained machine learning models 204, according to various embodiments. As shown in Figure 3A, training shape data 202 includes a first shape 302 that is represented using a number of different formats 306(1)-306(X) and a second shape 304 that is also represented using a number of different formats 308(1)-308(Y). Each of formats 306(1)-306(X) is referred to individually as format 306, and each of formats 308(1)-308(Y) is referred to individually as format 308. Shapes 302 and 304 can be represented using the same or different numbers of formats 306 and 308 and/or the same or different types of formats 306 and 308. For example, the two sets of formats 306 and 308 could be identical to one another, subsets of one another, overlapping with one another, or non-overlapping with one another.

Training engine 122 inputs representations of shape 302 in various formats 306 into a set of encoders 310(1)-310(X) and inputs representations of shape 304 in various formats 308 into a set of encoders 310(1)-310(Y). Each of encoders 310(1)-310(X) and 310(1)-310(Y) is referred to individually as encoder 310 and is included in the set of machine learning models 204. Additionally, each encoder 310 can be used to convert training shape data 202 (e.g., shapes 302 or 304) associated with a given format 306 into a corresponding set of embeddings, as discussed above. Consequently, as with formats 306 and 308, encoders 310(1)-310(X) into which representations of shape 302 are inputted can be identical to, subsets of, supersets of, overlapping with, or non-overlapping with encoders 310(1)-310(Y) into which representations of shape 304 are inputted.

Each encoder 310 converts a representation of shape 302 or 304 into a corresponding training embedding 216. More specifically, encoder 310(1) converts an inputted representation of shape 302 in format 306(1) into a training embedding 216(1), and encoder 310(X) converts an inputted representation of shape 302 in format 306(X) into another training embedding 216(X). Encoder 310(1) converts an inputted representation of shape 304 in format 308(1) into a training embedding 216(X+1), and encoder 310(Y) converts an inputted representation of shape 304 in format 308(Y) into an additional training embedding 216(X+Y).

Training engine 122 computes a set of similarities 318 between training embeddings 216 associated with positive shape pairs 212 selected from representations of shape 302 in different formats 306. Training engine 122 also computes a set of similarities 320 between training embeddings 216 associated with positive shape pairs 212 selected from representations of shape 304 in different formats 308. Training engine 122 further computes a set of similarities 322 between training embeddings 216 associated with a set of negative shape pairs 214, where each negative shape pair in the set includes one representation of shape 302 and one representation of shape 304 in the same format or different formats.

For example, training engine 122 could compute similarities 318, 320, and 322 as cosine similarities, Euclidean distances, dot products, and/or other measures of vector similarity or distance between pairs of training embeddings 216 generated from representations of shapes 302 and 304 in multiple formats 306 and 308. Similarities 318 would be computed between pairs of training embeddings 216(1)-216(X) generated from different representations of shape 302, similarities 320 would be computed between pairs of training embeddings 216(X+1)-(X+Y) generated from different representations of shape 304, and similarities 322 would be computed between pairs of training embeddings that include one training embedding selected from training embeddings 216(1)-216(X) and another training embedding selected from training embeddings 216(X+1)-(X+Y).

Training engine 122 computes one or more losses 206 based on similarities 318, 320, and 322. As mentioned above, losses 206 can be used to maximize similarities between training embeddings 216 of positive shape pairs 212 and minimize similarities between training embeddings 216 of negative shape pairs 214. For example, losses 206 could include a supervised contrastive loss, normalized temperature-scaled cross entropy loss, triplet loss, N-pair loss, and/or another type of loss that maximizes similarities 318 and 320 between training embeddings 216 from positive shape pairs 212 and minimizes similarities 322 between training embeddings 216 from negative shape pairs 214.

Training engine 122 additionally updates parameters of encoders 310 based on losses 206. For example, training engine 122 could use gradient descent and backpropagation to iteratively update neural network weights in encoders 310 in a way that reduces losses 206. In other words, training engine 122 can train encoders 310 to convert representations of the same shape into training embeddings 216 that are close to one another in a latent vector space. At the same time, training engine 122 can train encoders 310 to convert representations of different shapes into training embeddings 216 that are farther part in the latent vector space.

Figure 3B illustrates how training engine 122 of Figure 1 generates a set of trained machine learning models 204, according to various embodiments. More specifically, Figure 3B illustrates the training of encoders 310 in machine learning models 204 using training shape data 202 that incorporates augmentations to representations of shapes 302 and 304 in various formats 306 and 308.

As shown in Figure 3B, training engine 122 generates multiple variants 332(1)-332(A) and 334(1)-334(B) of each format 306 in which shape 302 is represented. Training engine 122 also generates multiple variants 336(1)-336(C) and 338(1)-338(D) of each format 308 in which shape 304 is represented. In particular, the representation of shape 302 in format 306(1) is used to generate variants 332(1)-332(A) (each of which is referred to individually as variant 332) of that representation in the same format 306(1). The representation of shape 302 in format 306(X) is used to generate variants 334(1)-334(B) (each of which is referred to individually as variant 334) of that representation in the same format 306(X). The representation of shape 304 in format 308(1) is used to generate variants 336(1)-336(C) (each of which is referred to individually as variant 336) of that representation in the same format 308(1). The representation of shape 304 in format 308(Y) is used to generate variants 338(1)-338(D) (each of which is referred to individually as variant 338) of that representation in the same format 308(Y).

In one or more embodiments, training engine 122 generates variants 332, 334, 336, and 338 using augmentations that are specific to the corresponding formats 306 and 308. For example, training engine 122 could generate one or more variants of an image, sketch, drawing, or another 2D representation of a shape by adding noise, blurring, rotating, translating, scaling, changing color-based attributes (e.g., color balance, saturation, temperature, exposure, brightness, etc.), or otherwise transforming the 2D representation without removing information related to the depiction of a shape in the 2D representation. In another example, training engine 122 could remove one or more images or views or perform random resized cropping of an image or view in a "multi-view" representation of a shape. In a third example, training engine 122 could apply a random rotation or random position jitter to 3D points in a mesh, boundary representation, or point cloud. In a fourth example, training engine 122 could use a language model, human input, dictionary, thesaurus, or another mechanism for processing or transforming text to generate multiple variations of a text description of a shape.

In some embodiments, one or more variants 332, 334, 336, and 338 are generated based on augmentations to the operation of the corresponding encoders 310. For example, training engine 122 could drop or mask random graph nodes, graph edges, or features that are processed by convolutional neural networks, recurrent neural networks, residual neural networks, graph neural networks, or other types of neural networks in encoders 310.

After variants 332, 334, 336, and 338 of shapes 302 and 304 in formats 306 and 308 are generated, training engine 122 obtains embeddings 216 of variants 332, 334, 336, and 338 as output of the corresponding encoders 310. More specifically, training engine 122 uses encoder 310(1) to generate embedding 216(1) from variant 332(1) and embedding 216(A) from variant 332(A). Training engine 122 uses encoder 310(X) to generate embedding 216(A+1) from variant 334(1) and embedding 216(A+B) from variant 334(B). Training engine 122 uses encoder 310(1) to generate embedding 216(A+B+1) from variant 336(1) and embedding 216(A+B+C) from variant 336(C). Training engine 122 uses encoder 310(Y) to generate embedding 216(A+B+C+1) from variant 338(1) and embedding 216(A+B+C+D) from variant 338(D).

Training engine 122 computes a set of similarities 348 between training embeddings 216 associated with positive shape pairs 212 selected from variants 332 and 334 of shape 302. Training engine 122 also computes a set of similarities 350 between training embeddings 216 associated with positive shape pairs 212 selected from variants 336 and 338 of shape 304. Training engine 122 further computes a set of similarities 352 between training embeddings 216 associated with negative shape pairs 214, where each of negative shape pairs 214 includes one variant 332 or 334 of shape 302 and one variant 336 or 338 of shape 304 in the same format or different formats. Similarities 348, 350, and 352 can include cosine similarities, Euclidean distances, dot products, and/or other measures of vector similarity or distance between pairs of training embeddings 216 generated from variants 332, 334, 336, and 338 of shapes 302 and 304.

Training engine 122 computes one or more losses 206 based on similarities 348, 350, and 352. As mentioned above, losses 206 can be used to maximize similarities between training embeddings 216 of positive shape pairs 212 and to minimize similarities between training embeddings 216 of negative shape pairs 214.

In one or more embodiments, losses 206 include the following representation:

$$l(u_i, v_i) = -log \frac{e^{\frac{\theta(u_i,v_i)}{\tau}}}{e^{\frac{\theta(u_i,v_i)}{\tau}} + \sum_{k=1}^{N} \mathbb{1}_{[k \neq i]} e^{\frac{\theta(u_i,v_k)}{\tau}} + \sum_{k=1}^{N} \mathbb{1}_{[k \neq i]} e^{\frac{\theta(u_i,u_k)}{\tau}}} \qquad (1)$$

In Equation 1, $u$ represents a set of training embeddings 216 associated with a first variant and $v$ represents a set of training embeddings 216 associated with a second variant. For example, $u$ could include embeddings for a set of augmented point clouds that are produced by applying a first set of augmentations to a set of original point clouds, and *v* could include embeddings for a set of augmented meshes that are produced by applying a second set of augmentations to a set of original meshes in the same manner. Further, *i* and *k* are indexes for individual embeddings in each set of

variants, and $\mathbb{I}_{[k \neq i]} \in \{0, 1\}$ is an indicator function that is set to 1 if and only if $k \neq i$. Additionally, $\theta(u, v) = s(g(u), g(v))$, where *s* is a cosine similarity (or another measure of vector similarity) and *g* is a nonlinear projection.

Continuing with the discussion of Equation 1, $\sum_{k=1}^{N} \mathbb{I}_{[k \neq i]} e^{\frac{\theta(u_i, v_k)}{\tau}}$ represents negative shape pairs 214, where each negative shape pair includes one shape from one variant represented by embedding $u_i$ and another shape from another variant represented by embedding $v_k$. $\sum_{k=1}^{N} \mathbb{I}_{[k \neq i]} e^{\frac{\theta(u_i, u_k)}{\tau}}$ represents negative shape pairs 214, where each negative shape pair includes two shapes from the same variant, as represented by embeddings $u_i$ and $u_k$. $e^{\frac{\theta(u_i, v_i)}{\tau}}$ represents positive shape pairs 212 associated with the two variants, where each positive shape pair includes an embedding $u_i$ of a given shape from the first variant and an embedding $v_i$ of the same shape from the second variant. Finally, $\tau$ is a temperature parameter that controls the strength of penalties associated with negative shape pairs 214.

Consequently, Equation 1 maximizes similarities 348 and 350 between different formats and/or variants of the same shape. Equation 1 also minimizes similarities 352 between different shapes, independent of the format or variant associated with each shape.

A loss between each pair of variants can then be computed using the as the average of losses computed using Equation 1 for all embeddings in both variants:

$$\mathcal{T}_{U,V} = \frac{1}{2N} \sum_{i=1}^{N} [l(u_i, v_i), l(v_i, u_i)] \qquad (2)$$

In Equation 2, *N* represents the number of embeddings in each variant, assuming the number of embeddings in both variants is equal.

An overall loss can then be computed as a sum of losses computed using Equation 2 for all possible pairs of variants 332, 334, 336, and 338:

$$\mathcal{T}_{\text{total}} = \sum_{U} \sum_{V} \mathcal{T}_{U,V} \qquad (3)$$

After losses 206 are computed using similarities 348, 350, and 352, training engine 122 updates parameters of encoders 310 based on losses 206. For example, training engine 122 could use gradient descent and backpropagation to iteratively update neural network weights in encoders 310 in a way that reduces losses 206. Consequently, training engine 122 trains encoders 310 to convert multiple variants and formats of the same shape into training embeddings 216 that are close to one another in a latent vector space. At the same time, training engine 122 can train encoders 310 to convert different shapes into training embeddings 216 that are farther part in the latent vector space, independent of the variants or formats associated with the shapes.

Returning to the discussion of Figure 2, after training of machine learning models 204 is complete, mapping engine 124 uses the trained machine learning models 204 to generate embeddings 224 of additional shape data 222. Mapping engine 124 also stores mappings 226 between shape data 222 and the corresponding embeddings 224 in data store 208. For example, mapping engine 124 could retrieve shape data 222 that includes representations of shapes in multiple formats from one or more databases, filesystems, or other types of data stores. Mapping engine 124 could determine the format associated with each shape representation in shape data 222 and use a corresponding encoder neural network in the set of trained machine learning models 204 to convert that shape representation into a corresponding embedding in embeddings 224. Mapping engine 124 could also store a mapping between a file, path, identifier, format, owner, user group, or another attribute or set of attributes associated with the shape representation and the embedding in a database, forward index, inverted index, or another type of data store or data structure.

In some embodiments, mapping engine 124 generates mappings 226 that streamline the identification or retrieval of shape representations that represent the same shape or similar shapes. As discussed above, training engine 122 trains machine learning models 204 so that embeddings 224 of shape representations of the same shape are closer to one another in a latent vector space and embeddings 224 of shape representations of different shapes are farther apart in the latent vector space. Consequently, mapping engine 124 can generate mappings 226 in data store 208 that reflect the similarities or differences in the corresponding shape representations. For example, mapping engine 124 could determine "buckets" or clusters of embeddings 224 that are within a threshold distance or above a threshold similarity to one another in the latent vector space. For each bucket or cluster of embeddings 224, mapping engine 124 could associate mappings 226 that include these embeddings 224 with a unique bucket or cluster identifier that indicates a high degree of similarity in the corresponding shape representations. Mapping engine 124 could also, or instead, apply multiple thresholds to similarities or distances computed between embeddings 224 to identify buckets or clusters of embeddings 224 representing varying degrees of similarity in the corresponding shape representations. Mapping engine 124 could also update the corresponding mappings 226 with attributes that uniquely identify the buckets or clusters and indicate the degree of similarity represented by each bucket or cluster.

Evaluation engine 126 uses shape data 222, embeddings 224, and/or mappings 226 in data store 208 to process queries related to similarity in shapes. Each query can include query shape attributes 232 that represent one or more query shapes. For example, query shape attributes 232 could include (but are not limited to) one or more shape representations in one or more formats, a text-based description of a query shape, subsets of one or more shape representations (e.g., a crop of an image or drawing, a subset of a 3D mesh or point cloud, a floor in a floorplan, a curve, a line, a polygon, a polyhedron, etc.), or another attribute that depicts, describes, or is otherwise relevant to one or more query shapes.

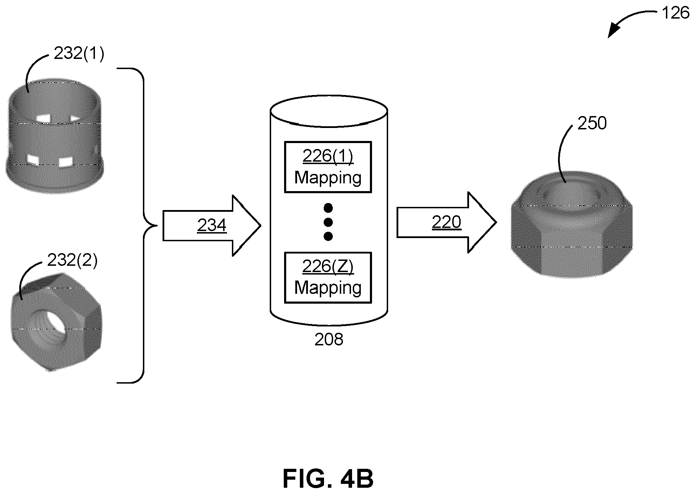

Evaluation engine 126 converts query shape attributes 232 into a query shape embedding 234 for the corresponding query shape(s). For example, evaluation engine 126 could match a filename, file, path, or another identifier for a representation of a query shape in query shape attributes 232 to a corresponding mapping in data store 208. Evaluation engine 126 could use the mapping to retrieve a corresponding query shape embedding 234 for that query shape. Evaluation engine 126 could repeat the process for each distinct shape representation specified in query shape attributes 232. When a portion of query shape attributes 232 cannot be matched to a corresponding mapping in data store 208 (e.g., when query shape attributes 232 specify a shape representation that is not found in data store 208), evaluation engine 126 could use a corresponding encoder in machine learning models 204 to convert that portion of query shape attributes 232 into a corresponding embedding. When query shape attributes 232 are associated with multiple shape representations, evaluation engine 126 could aggregate embeddings for those shape representations into a single query shape embedding 234, as described in further detail below with respect to Figure 4B.

Evaluation engine 126 also determines one or more target formats 236 associated with the query and retrieves a set of target format embeddings 246 associated with target formats 236. Target formats 236 include some or all formats in which shape data 222 can be represented. For example, evaluation engine 126 could retrieve target formats 236 and query shape attributes 232 from the same query. Evaluation engine 126 could also, or instead, use one or more default target formats 236 (e.g., if the query does not include specific target formats 236), such as target formats 236 that are different from those associated with query shape attributes 232 and/or all formats for which embeddings 224 can be generated.

Evaluation engine 126 computes similarities 248 between query shape embedding 234 and target format embeddings 246 for shape representations in target formats 236. Evaluation engine 126 also uses similarities 248 to identify one or more target shapes 250 that match query shape attributes 232, target formats 236, and/or parameters of the query. Evaluation engine 126 then returns the identified target shapes 250 in a response 220 to the query.

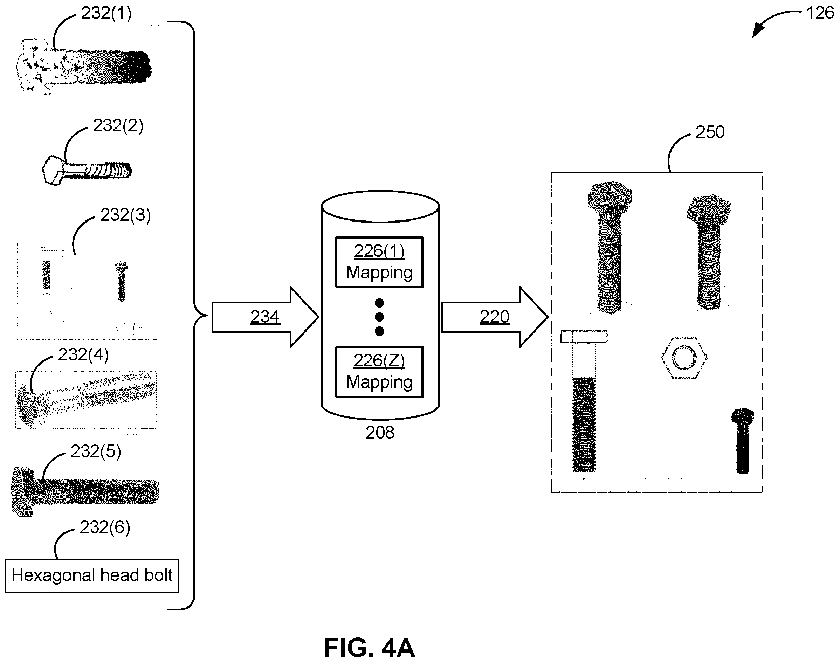

Figure 4A illustrates how evaluation engine 126 of Figure 1 processes a query, according to various embodiments. As shown in Figure 4A, a query shape can be represented by multiple sets of query shape attributes 232(1)-232(6). Each set of query shape attributes 232 corresponds to a representation of the query shape in a different format. For example, query shape attributes 232(1) could include a point cloud representation of the query shape, query shape attributes 232(2) could include a 2D sketch representation of the query shape, query shape attributes 232(3) could include a 2D drawing representation of the query shape, query shape attributes 232(4) could include a 2D image representation of the query shape, query shape attributes 232(5) could include a 3D model representation of the query shape, and query shape attributes 232(6) could include a text-based representation of the query shape.

Any set of query shape attributes 232(1)-232(6) can be specified as a representation of the query shape in a query. For example, query shape attributes 232(6) could be received as text-based input that is provided by a user via a search field. In another example, at least one of query shape attributes 232(1), 232(2), 232(3), 232(4), or 232(5) could be specified as a file, filename, path, unique identifier, binary data, or another representation using one or more parameters of the query.

Evaluation engine 126 retrieves query shape attributes 232 from the query and determines a corresponding query shape embedding 234. For example, evaluation engine 126 could use a trained encoder neural network in machine learning models 204 to convert query shape attributes 232 in a format associated with the trained encoder neural network into a corresponding query shape embedding 234. Evaluation engine 126 could also, or instead, perform a lookup of data store 208 using query shape attributes 232 and use one or more mappings 226 that include query shape attributes 232 to retrieve the corresponding query shape embedding 234.

Evaluation engine 126 uses query shape embedding 234 and mappings 226(1)-226(Z) in data store 208 to generate response 220 that includes one or more target shapes 250 that match the query shape. For example, evaluation engine 126 could compute similarities 248 between query shape embedding 234 and other embeddings 224 in data store 208. Evaluation engine 126 could apply a threshold to the computed similarities 248 and identify target shapes 250 as shape representations that are mapped to embeddings 224 with similarities 248 that fall below the threshold. In another example, evaluation engine 126 could match query shape embedding 234 to a tag, identifier, another attribute in data store 208 that represents a bucket or cluster of embeddings 224 that are within a threshold distance of one another. Evaluation engine 126 could use the attribute to retrieve other embeddings 224 in the same bucket or cluster from data store 208 and use mappings 226 that include the other embeddings 224 to retrieve the corresponding target shapes 250. Evaluation engine 126 could then return target shapes 250 in response 220.

Figure 4B illustrates how evaluation engine 126 of Figure 1 processes a query, according to various other embodiments. More specifically, Figure 4B illustrates the operation of evaluation engine 126 in processing a query that includes query shape attributes 232(1) and 232(2) associated with different query shapes. For example, query shape attributes 232(1) could include a multiview image representation of a first shape, and query shape attributes 232(2) could include a boundary representation of a second shape.

Evaluation engine 126 retrieves query shape attributes 232 from the query and determines a corresponding query shape embedding 234. Continuing with the above example, evaluation engine 126 could use trained encoder neural networks in machine learning models 204 to convert query shape attributes 232(1) into a first embedding and convert query shape attributes 232(2) into a second embedding. Evaluation engine 126 could also, or instead, use mappings 226 that include query shape attributes 232(1) and 232(2) to retrieve the corresponding embeddings. Evaluation engine 126 could then compute query shape embedding 234 as an average, weighted average, sum, difference, or another aggregation of the two embeddings associated with the two sets of query shape attributes 232(1) and 232(2).

In one or more embodiments, evaluation engine 126 combine embeddings associated with query shape attributes 232(1) and 232(2) into query shape embedding 234 based on additional parameters associated with the query. For example, evaluation engine 126 could retrieve weights associated with each set of query shape attributes 232(1) and 232(2) from the query. Evaluation engine 126 could then use the weights in a weighted combination and/or interpolation of query shape attributes 232(1) and 232(2) that is used to produce query shape embedding 234. In another example, evaluation engine 126 could determine the type of aggregation to be applied to embeddings of query shape attributes 232(1) and 232(2) from one or more parameters in the query. In a third example, the query could specify query shape attributes 232(1) and 232(2) as one or more subsets (e.g., crops, regions, surfaces, etc.) of the corresponding query shapes. Evaluation engine 126 could use machine learning models 204 to convert these subsets into embeddings and aggregate the embeddings into query shape embedding 234.

Evaluation engine 126 uses query shape embedding 234 and mappings 226(1)-226(Z) in data store 208 to generate response 220 that includes a target shape 250 that matches query shape embedding 234. For example, evaluation engine 126 could compute similarities 248 between query shape embedding 234 and other embeddings 224 in data store 208. Evaluation engine 126 could identify the embedding with the highest similarity to query shape embedding 234 and use one or more mappings 226 that include the identified embedding to retrieve the corresponding target shape 250 in a point cloud format from data store 208. Evaluation engine 126 could then return target shape 250 in the point cloud format in response 220.

While Figure 4B illustrates the retrieval of a single target shape 250 using query shape attributes 232(1) and 232(2) associated with two different query shapes, it will be appreciated that evaluation engine 126 can process queries that include multiple sets of query shape attributes 232 in other ways. For example, queries processed by evaluation engine 126 could include multiple sets of query shape attributes 232 for the same shape, three or more sets of query shape attributes 232 for three or more shapes, multiple sets of query shape attributes 232 in the same format, or multiple sets of query shape attributes 232 in different formats. In another example, evaluation engine 126 could perform various types, combinations, or permutations of aggregations of embeddings associated with query shape attributes 232 to produce query shape embedding 234. In a third example, evaluation engine 126 could match query shape embedding 234 generated from multiple sets of query shape attributes 232 to multiple target shapes 250. These target shapes 250 could be retrieved from all possible formats in which shapes in data store 208 can be represented, one or more formats specified in the corresponding query, one or more formats that are the same as the format(s) associated with query shape attributes 232 in the query, and/or one or more formats that are different from the format(s) associated with query shape attributes 232 in the query.

Returning to the discussion of Figure 2, evaluation engine 126 can also be used to generate new shapes having query shape attributes 232 in one or more target formats 236, given queries that specify those query shape attributes 232 and/or target formats 236. For example, machine learning models 204 could include decoders that are paired with encoders that generate embeddings 224 of shape data 222. These decoders could be trained with the corresponding encoders by training engine 122 using reconstruction losses and/or other losses 206 associated with training shape data 202 and/or training embeddings 216. Each trained decoder could convert embeddings 224 of shape data 222 into shape representations in a corresponding format. Upon receiving a query that specifies generation of a new shape, a set of query shape attributes 232 for the new shape, and a target format associated with the new shape, evaluation engine 126 could convert query shape attributes 232 into a corresponding query shape embedding 234. Evaluation engine 126 could also use a decoder for the target format to convert query shape embedding 234 into the new shape in the target format. Evaluation engine 126 could then return the new shape in a corresponding response 220 to the query.

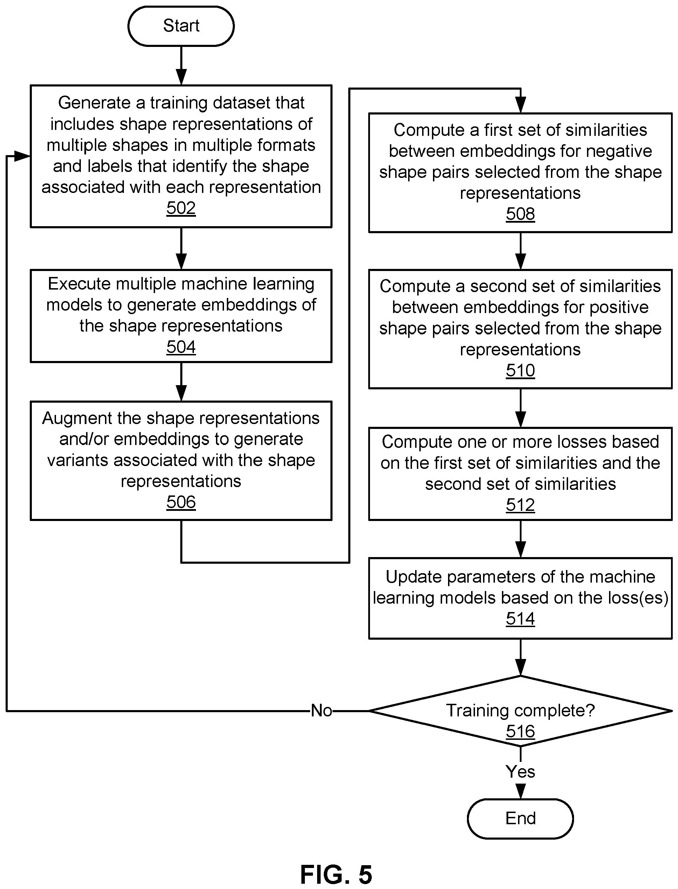

Figure 5 sets forth a flow diagram of method steps for training a set of machine learning models to generate embeddings for shapes that can be represented using different formats, according to various embodiments. Although the method steps are described in conjunction with the systems of Figures 1-3B, persons skilled in the art will understand that any system configured to perform the method steps in any order falls within the scope of the present disclosure.

As shown, in step 502, training engine 122 generates a training dataset that includes shape representations of multiple shapes in multiple formats and labels that identify the shape associated with each representation. For example, training engine 122 could retrieve the shape representations and/or labels from a database, filesystem, and/or another type of data store. Training engine 122 could also, or instead, receive some or all of the labels from human annotators. Each shape representation could include a 2D or 3D object that is depicted using a sketch, drawing, image, point cloud, mesh, boundary representation, 3D model, text-based description, or another format. Each label could include a unique identifier for a corresponding shape and be assigned to shape representations for that shape.

In step 504, training engine 122 executes multiple machine learning models to generate embeddings of the shape representations. For example, training engine 122 could use a separate encoder neural network for each format associated with the shape representations to convert a subset of shape representations in that format into a corresponding set of embeddings.

In step 506, training engine 122 augments the shape representations and/or embeddings to generate variants associated with the shape representations. For example, training engine 122 could generate multiple variants of a shape representation that is processed by a graph neural network, convolutional neural network, transformer neural network, or another type of encoder neural network by performing node masking, feature masking, edge dropping, or other augmentations to a graph or a set of features processed by the encoder neural network during the generation of an embedding of the shape representation. In another example, training engine 122 could generate multiple variants of a 2D or 3D shape representation by rotating, scaling, translating, adding noise, applying cutter jitter, cropping, blurring, or otherwise transforming the shape representation.

In step 508, training engine 122 computes a first set of similarities between embeddings of negative shape pairs selected from the shape representations. In step 510, training engine 122 computes a second set of similarities between embeddings of positive shape pairs selected from the shape representations. Each negative shape pair includes shape representations of two different shapes. Each positive shape pair includes two shape representations of the same shape in two different formats or two variants of the same format.

In step 512, training engine 122 computes one or more losses based on the first set of similarities and the second set of similarities. For example, training engine 122 could compute a supervised contrastive loss, normalized temperature-scaled cross entropy loss, triplet loss, N-pair loss, or another type of loss that maximizes similarities between embeddings from the positive shape pairs and minimizes similarities between embeddings from the negative shape pairs. When the machine learning models include decoder neural networks that reconstruct the shape representations based on the embeddings, training engine 122 could also compute a mean squared error, L1 loss, or another type of reconstruction loss between the shape representations and the corresponding reconstructions.

In step 514, training engine 122 updates parameters of the machine learning models based on the loss(es). For example, training engine 122 could use gradient descent and backpropagation to update weights in each of the machine learning models in a way that reduces the loss(es).

In step 516, training engine 122 determines whether or not training of the machine learning model is complete. For example, training engine 122 could determine that training is complete when one or more conditions are met. These condition(s) include (but are not limited to) convergence in the parameters of the machine learning models; the lowering of the loss(es) to below a threshold; or a certain number of training steps, iterations, batches, and/or epochs. While training of the machine learning model is not complete, training engine 122 continues performing steps 502-514. Training engine 122 then ends the process of training the machine learning models once the condition(s) are met.

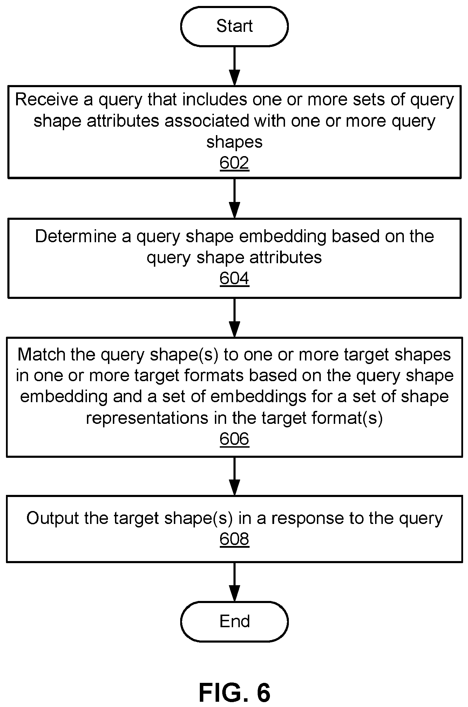

Figure 6 sets forth a flow diagram of method steps for processing a query associated with one or more shapes that are represented using different formats, according to various embodiments. Although the method steps are described in conjunction with the systems of Figures 1-4B, persons skilled in the art will understand that any system configured to perform the method steps in any order falls within the scope of the present disclosure.

As shown, in step 602, evaluation engine 126 receives a query that includes one or more sets of query shape attributes. The query shape attributes could include one or more representations of the same query shape in one or more formats. For example, the query shape attributes could include at least one of a text-based description, a sketch, a drawing, one or more images, a 3D model, a mesh, a point cloud, a boundary representation, a floorplan, or a construction model representing the same query shape. The query shape attributes can also, or instead, describe or depict multiple query shapes. For example, the query shape attributes could include two or more query shapes that are represented using the same format or different formats. The query shape attributes could also, or instead, include portions of two or more query shapes.

In step 604, evaluation engine 126 determines a query shape embedding based on the query shape attributes. For example, evaluation engine 126 could generate or retrieve an embedding associated with each set of query shape attributes in the query. When the query includes query shape attributes associated with multiple query shapes, evaluation engine 126 could average, interpolate, sum, or otherwise aggregate the corresponding embeddings into a single query shape embedding.

In step 606, evaluation engine 126 matches the query shape(s) to one or more target shapes in one or more target formats based on at least one of the query shape embedding or a set of embeddings for a set of shape representations in the target format(s). For example, evaluation engine 126 could retrieve the target format(s) from one or more parameters in the query. Evaluation engine 126 could also, or instead, determine the target format(s) as a set of formats associated with the query shape attributes, one or more formats that are different from the format(s) associated with the query shape attributes, or all available formats associated with the shape representations. Evaluation engine 126 could use one or more machine learning models to compute embeddings of shape representations in the target format(s), or evaluation engine 126 could retrieve embeddings of the shape representations in the target format(s) from a data store. Evaluation engine 126 could compute similarities between the query shape embedding and the embeddings of the shape representations and apply a threshold to the similarities to identify the target shape(s). In another example, evaluation engine 126 could use one or more decoder neural networks associated with the target format(s) to convert the query shape embedding into the target shape(s) in the target format(s).

In step 608, evaluation engine 126 outputs the target shape(s) in a response to the query. For example, evaluation engine 126 could return files, filenames, unique identifiers, paths, binary data, similarities, and/or other data related to the target shape(s) in the response. The returned data allows a user and/or entity from which the query was received to identify or retrieve target shape(s) that are the same as or similar to the query shape(s) and/or query shape attributes.

In sum, the disclosed techniques train and execute machine learning models to characterize similarities in shapes that can be represented in multiple formats. These formats include (but are not limited to) sketches, drawings, images, 3D models, meshes, boundary representations, point clouds, floorplans, generative designs, or construction models. Multiple machine learning models are used to generate embeddings of the shapes. For example, a separate machine learning model could be used to convert representations of shapes in a certain format into a corresponding set of embeddings.

To train the machine learning models, positive shape pairs and negative shape pairs are formed within a training dataset that includes shape representations of multiple shapes in multiple formats. Each positive shape pair includes two representations of the same shape. These representations can be in different formats or correspond to different variants of the shape in the same format. Each negative shape pair includes two different shapes, which can be in the same variant or format or different variants or formats. A cosine similarity, Euclidean distance, dot product, or another measure of similarity is computed between embeddings of each positive shape pair and embeddings of each negative shape pair. The machine learning models are also trained using one or more losses that maximize measures of similarity between embeddings of positive shape pairs and minimize measures of similarity between embeddings of negative shape pairs.

After the machine learning models are trained, embeddings generated by the machine learning models are used to process queries related to similarities in shapes across multiple formats. For example, a query could specify one or more query shapes in one or more formats and one or more target formats for shapes to be matched to the query shape(s). A machine learning model could be used to convert each query shape into a corresponding query shape embedding. When multiple query shape embeddings are generated from multiple query shapes, the corresponding query shape embeddings could be interpolated, averaged, or otherwise aggregated into a single query shape embedding associated with the query. Measures of similarity could be computed between the query shape embedding and embeddings of shapes in one or more target formats, and shapes associated with measures of similarity that exceed a threshold could be returned in a response to the query as "matching" or "similar" shapes to the query shape(s).

One technical advantage of the disclosed techniques relative to the prior art is that, with the disclosed techniques, embeddings of shapes can be used to characterize similarity or dissimilarity in the shapes even when the shapes are represented using different formats. Accordingly, the disclosed techniques can be used to retrieve target shapes that are the same as or similar to a query shape, independent of the formats in which the query shape and target shapes are represented or stored. In addition, because the embeddings can be aggregated or processed to represent combinations or transformations of the corresponding shapes, the disclosed techniques can be used to identify target shapes that combine the attributes of two or more query shapes or process other types of queries related to similarity in the shapes across multiple formats. These technical advantages provide one or more technological improvements over prior art approaches.

1. In some embodiments, a computer-implemented method for analyzing similarities associated with a plurality of shapes when processing a query comprises determining (i) a first embedding for a first query shape associated with a first query and a first format and (ii) a first plurality of embeddings for a first plurality of shapes associated with a second format, wherein the first embedding and the first plurality of embeddings are generated by one or more trained machine learning models based on the first query shape and the first plurality of shapes; matching, based on the first embedding and the first plurality of embeddings, the first query shape to one or more shapes included in the first plurality of shapes; and outputting the one or more shapes in a first response associated with the first query.

2. The computer-implemented method of clause 1, further comprising determining a second embedding for a second query that includes a textual description of a second query shape; and matching the textual description to one or more additional shapes included in the first plurality of shapes based on the second embedding and the first plurality of embeddings.

3. The computer-implemented method of any of clauses 1-2, further comprising matching the first query shape to one or more additional shapes associated with a third format based on the first embedding and a second plurality of embeddings for a second plurality of shapes associated with the third format; and outputting the one or more additional shapes in the first response associated with the first query.

4. The computer-implemented method of any of clauses 1-3, further comprising determining a second embedding for a second query shape associated with a second query and at least one of the first format or the second format; executing a decoder neural network to convert the second embedding into a target shape in a third format; and outputting the target shape in a second response associated with the second query.

5. The computer-implemented method of any of clauses 1-4, wherein determining the first embedding comprises determining the first query shape based on one or more attributes of the first query; and executing a first machine learning model that is included in the one or more trained machine learning models and is associated with the first format to generate the first embedding based on the first query shape.

6. The computer-implemented method of any of clauses 1-5, wherein determining the first plurality of embeddings further comprises determining the second format based on one or more additional attributes of the first query; and executing a second machine learning model that is included in the one or more trained machine learning models and is associated with the second format to generate the first plurality of embeddings based on the first plurality of shapes.

7. The computer-implemented method of any of clauses 1-6, wherein determining the first embedding comprises determining a plurality of query shapes to be combined into the first query shape based on one or more attributes of the first query; and aggregating a plurality of embeddings associated with the plurality of query shapes into the first embedding.

8. The computer-implemented method of any of clauses 1-7, wherein determining the first embedding comprises determining the first query shape based on one or more attributes of the first query; and matching the first query shape to the first embedding based on a plurality of mappings between a second plurality of shapes associated with the first format and a second plurality of embeddings for the second plurality of shapes.

9. The computer-implemented method of any of clauses 1-8, wherein matching the first query shape associated with the first query to the one or more shapes comprises determining a plurality of similarities between the first embedding and the first plurality of embeddings; and determining the one or more shapes based on one or more thresholds associated with the plurality of similarities.

10. The computer-implemented method of any of clauses 1-9, wherein the first format and the second format are determined based on one or more attributes of the first query and comprise at least one of a sketch, a drawing, an image, a three-dimensional (3D) model, a mesh, a boundary representation, a point cloud, a floorplan, or a construction model.

11. In some embodiments, one or more non-transitory computer-readable media store instructions that, when executed by one or more processors, cause the one or more processors to perform the steps of determining (i) a first embedding for a first query shape associated with a first query and a first format and (ii) a first plurality of embeddings for a first plurality of shapes associated with a second format, wherein the first embedding and the first plurality of embeddings are generated by one or more trained machine learning models based on the first query shape and the first plurality of shapes; matching, based on the first embedding and the first plurality of embeddings, the first query shape to one or more shapes included in the first plurality of shapes; and outputting the one or more shapes in a first response associated with the first query.

12. The one or more non-transitory computer-readable media of clause 11, wherein the instructions further cause the one or more processors to perform the steps of determining a second embedding for a second query that includes a textual description of a second query shape; and matching the textual description to one or more additional shapes included in the first plurality of shapes based on the second embedding and the first plurality of embeddings.

13. The one or more non-transitory computer-readable media of any of clauses 11-12, wherein the instructions further cause the one or more processors to perform the steps of determining a second embedding for a second query shape that is associated with the first query and the second format; and determining the one or more shapes based on a combination of the first embedding and the second embedding.

14. The one or more non-transitory computer-readable media of any of clauses 11-13, wherein the combination of the first embedding and the second embedding comprises at least one of an average, a weighted average, a sum, or a difference.

15. The one or more non-transitory computer-readable media of any of clauses 11-14, wherein the instructions further cause the one or more processors to perform the steps of determining a third format based on one or more additional attributes of the first query; and matching the first query shape to one or more additional shapes associated with the third format based on the first embedding and a second plurality of embeddings for a second plurality of shapes associated with the third format.

16. The one or more non-transitory computer-readable media of any of clauses 11-15, wherein determining the first embedding and the first plurality of embeddings comprises determining at least one of the first format or the second format based on one or more attributes of the first query; executing a first encoder neural network that is included in the one or more trained machine learning models and associated with the first format to generate the first embedding based on the first query shape; and executing a second encoder neural network that is included in the one or more trained machine learning models and associated with the second format to generate the first plurality of embeddings based on the first plurality of shapes.

17. The one or more non-transitory computer-readable media of any of clauses 11-16, wherein determining the first embedding comprises determining the first format based on one or more additional attributes of the first query; and matching the first query shape to the first embedding based on a plurality of mappings between a second plurality of shapes associated with the first format and a second plurality of embeddings generated from the second plurality of shapes.

18. The one or more non-transitory computer-readable media of any of clauses 11-17, wherein matching the first query shape to the one or more shapes comprises determining a plurality of similarities between the first embedding and the first plurality of embeddings; and determining the one or more shapes based on one or more thresholds associated with the plurality of similarities.

19. The one or more non-transitory computer-readable media of any of clauses 11-18, wherein the plurality of similarities comprises at least one of a cosine similarity, a Euclidean distance, or a dot product.

20. In some embodiments, a system comprises one or more memories that store instructions, and one or more processors that are coupled to the one or more memories and, when executing the instructions, are configured to perform the steps of determining (i) a first embedding for a first query shape associated with a first query and a first format and (ii) a first plurality of embeddings for a first plurality of shapes associated with a second format, wherein the first embedding and the first plurality of embeddings are generated by one or more trained machine learning models based on the first query shape and the first plurality of shapes; matching, based on the first embedding and the first plurality of embeddings, the first query shape to one or more shapes included in the first plurality of shapes; and outputting the one or more shapes in a first response associated with the first query shape.

Any and all combinations of any of the claim elements recited in any of the claims and/or any elements described in this application, in any fashion, fall within the contemplated scope of the present invention and protection.

The descriptions of the various embodiments have been presented for purposes of illustration, but are not intended to be exhaustive or limited to the embodiments disclosed. Many modifications and variations will be apparent to those of ordinary skill in the art without departing from the scope and spirit of the described embodiments.

Aspects of the present embodiments may be embodied as a system, method or computer program product. Accordingly, aspects of the present disclosure may take the form of an entirely hardware embodiment, an entirely software embodiment (including firmware, resident software, micro-code, etc.) or an embodiment combining software and hardware aspects that may all generally be referred to herein as a "module," a "system," or a "computer." In addition, any hardware and/or software technique, process, function, component, engine, module, or system described in the present disclosure may be implemented as a circuit or set of circuits. Furthermore, aspects of the present disclosure may take the form of a computer program product embodied in one or more computer readable medium(s) having computer readable program code embodied thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

Aspects of the present disclosure are described above with reference to flowchart illustrations and/or block diagrams of methods, apparatus (systems) and computer program products according to embodiments of the disclosure. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine. The instructions, when executed via the processor of the computer or other programmable data processing apparatus, enable the implementation of the functions/acts specified in the flowchart and/or block diagram block or blocks. Such processors may be, without limitation, general purpose processors, special-purpose processors, application-specific processors, or field-programmable gate arrays.

The flowchart and block diagrams in the figures illustrate the architecture, functionality, and operation of possible implementations of systems, methods and computer program products according to various embodiments of the present disclosure. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

While the preceding is directed to embodiments of the present disclosure, other and further embodiments of the disclosure may be devised without departing from the basic scope thereof, and the scope thereof is determined by the claims that follow.

**Claims**

1. A computer-implemented method for analyzing similarities associated with a plurality of shapes when processing a query, the method comprising:

   determining (i) a first embedding for a first query shape associated with a first query and a first format and (ii) a first plurality of embeddings for a first plurality of shapes associated with a second format, wherein the first embedding and the first plurality of embeddings are generated by one or more trained machine learning models based on the first query shape and the first plurality of shapes;
   matching, based on the first embedding and the first plurality of embeddings, the first query shape to one or more shapes included in the first plurality of shapes; and

outputting the one or more shapes in a first response associated with the first query.

2. The computer-implemented method of claim 1, further comprising:

   determining a second embedding for a second query that includes a textual description of a second query shape; and
   matching the textual description to one or more additional shapes included in the first plurality of shapes based on the second embedding and the first plurality of embeddings.

3. The computer-implemented method of claim 1 or 2, further comprising:

   matching the first query shape to one or more additional shapes associated with a third format based on the first embedding and a second plurality of embeddings for a second plurality of shapes associated with the third format; and
   outputting the one or more additional shapes in the first response associated with the first query.

4. The computer-implemented method of any preceding claim, further comprising:

   determining a second embedding for a second query shape associated with a second query and at least one of the first format or the second format;
   executing a decoder neural network to convert the second embedding into a target shape in a third format; and
   outputting the target shape in a second response associated with the second query.

5. The computer-implemented method of any preceding claim, wherein determining the first embedding comprises:

   determining the first query shape based on one or more attributes of the first query; and
   executing a first machine learning model that is included in the one or more trained machine learning models and is associated with the first format to generate the first embedding based on the first query shape.

6. The computer-implemented method of claim 5, wherein determining the first plurality of embeddings further comprises:

   determining the second format based on one or more additional attributes of the first query; and
   executing a second machine learning model that is included in the one or more trained machine learning models and is associated with the second format to generate the first plurality of embeddings based on the first plurality of shapes.

7. The computer-implemented method of claim 1, wherein determining the first embedding comprises:

   determining a plurality of query shapes to be combined into the first query shape based on one or more attributes of the first query; and
   aggregating a plurality of embeddings associated with the plurality of query shapes into the first embedding.

8. The computer-implemented method of claim 1, wherein determining the first embedding comprises:

   determining the first query shape based on one or more attributes of the first query; and
   matching the first query shape to the first embedding based on a plurality of mappings between a second plurality of shapes associated with the first format and a second plurality of embeddings for the second plurality of shapes.

9. The computer-implemented method of any preceding claim, wherein matching the first query shape associated with the first query to the one or more shapes comprises:

   determining a plurality of similarities between the first embedding and the first plurality of embeddings; and
   determining the one or more shapes based on one or more thresholds associated with the plurality of similarities.

10. The computer-implemented method of any preceding claim, wherein the first format and the second format are determined based on one or more attributes of the first query and comprise at least one of a sketch, a drawing, an image, a three-dimensional (3D) model, a mesh, a boundary representation, a point cloud, a floorplan, or a con-

**EP 4 398 125 A1**

struction model.

11. A computer program product comprising instructions that, when executed by one or more processors, cause the one or more processors to perform the method of any of claims 1 to 10.

12. A system, comprising:

one or more memories that store instructions, and
one or more processors that are coupled to the one or more memories and, when executing the instructions, are configured to perform the method of any of claims 1 to 10.

**17**

**FIG. 1**

FIG. 2

FIG. 3A

**FIG. 3B**

EP 4 398 125 A1

**FIG. 4A**

FIG. 4B

**FIG. 5**

Start

Receive a query that includes one or more sets of query shape attributes associated with one or more query shapes
602

Determine a query shape embedding based on the query shape attributes
604

Match the query shape(s) to one or more target shapes in one or more target formats based on the query shape embedding and a set of embeddings for a set of shape representations in the target format(s)
606

Output the target shape(s) in a response to the query
608

End

FIG. 6

Europäisches
Patentamt

European
Patent Office

Office européen
des brevets

# EUROPEAN SEARCH REPORT

Application Number

EP 24 15 0426

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/104318 A1 (PONJOU TASSE FLORA [GB] ET AL) 2 April 2020 (2020-04-02) * paragraphs [0001], [0007] – [0008], [0010] – [0011], [0019], [0027], [0033] – [0035], [0044], [0049], [0073]; figures 5-6 * | 1-12 | INV. G06F16/53 G06F16/55 G06F16/56 |

TECHNICAL FIELDS SEARCHED (IPC)

G06F

The present search report has been drawn up for all claims

| Place of search | Date of completion of the search | Examiner |
|---|---|---|
| The Hague | 11 April 2024 | Bercan, Radu |

EPO FORM 1503 03.82 (P04C01)

## ANNEX TO THE EUROPEAN SEARCH REPORT
## ON EUROPEAN PATENT APPLICATION NO.

EP 24 15 0426

This annex lists the patent family members relating to the patent documents cited in the above-mentioned European search report.
The members are as contained in the European Patent Office EDP file on
The European Patent Office is in no way liable for these particulars which are merely given for the purpose of information.

11-04-2024

| Patent document cited in search report | Publication date | Patent family member(s) | Publication date |
|---|---|---|---|
| US 2020104318 A1 | 02-04-2020 | EP 3593260 A1 | 15-01-2020 |
| | | US 2020104318 A1 | 02-04-2020 |
| | | WO 2018162896 A1 | 13-09-2018 |

EPO FORM P0459

For more details about this annex : see Official Journal of the European Patent Office, No. 12/82